# EUROPEAN PATENT APPLICATION

(11) **EP 4 838 082 A1**
(43) Date of publication of application: **11.11.2026**
(21) Application number: 26175792.6
(22) Date of filing: 30.04.2026
(51) Int. Cl.: F03B 13/00, F03B 15/00, H02J 3/38, H02J 3/1885

(54) **AN ARRANGEMENT AND A METHOD FOR A HYDROPOWER PLANT FOR CONTROLLING ENERGY PRODUCTION AND CONSUMPTION**

(30) Priority: 09.05.2025 FI 20255373
(71) Applicant: Fortum OYJ, 02150 Espoo (FI)
(72) Inventor: LINDGREN, Olli, 02150 ESPOO (FI)
(74) Representative: Laine IP Oy

(57) **Abstract**

There is provided an arrangement configured to control energy production and consumption of the arrangement, the arrangement comprising: a hydropower plant connected to an electricity network (122), the hydropower plant including at least one turbine generator (121), and at least one electric boiler (111) connected to the electricity network (122). Output power (Pₒᵤₜ) of the arrangement comprises a sum of power (Pt) produced by the at least one turbine generator (121) and power (P_{b}) of the at least one electric boiler (111). The output power (Pₒᵤₜ) of the arrangement is controllable such that the at least one turbine generator (121) is configured to produce power (Pₜ) and the at least one electric boiler (111) is configured to consume power (P_{b}).

## Description

### TECHNICAL FIELD

The present invention relates to an arrangement and a method for a hydropower plant configured to control energy production and consumption of the arrangement, and uses for such.

### BACKGROUND

In hydropower plant falling or running water is configured to produce electricity or to power machines. A gravitational potential or kinetic energy of a water source is converted to electricity or used to power machines. Hydroelectricity generation starts by converting either potential energy of water, which is due to the site's elevation, or the kinetic energy of moving water into electrical energy. Hydroelectric power generation is sustainable energy production, and does not directly produce carbon dioxide or other atmospheric pollutants.

### SUMMARY

Aim is to control energy production and consumption in a hydropower plant.

The invention is defined by the features of the independent claims. Some embodiments are defined in the dependent claims.

According to a first aspect of the present invention, there is provided an arrangement configured to control energy production and consumption of the arrangement, the arrangement comprising: a hydropower plant connected to an electricity network, the hydropower plant including at least one turbine generator, and at least one electric boiler connected to the electricity network. Output power (Pₒᵤₜ) of the arrangement comprises a sum of power (Pₜ) produced by the at least one turbine generator and power (P_{b}) of the at least one electric boiler. The output power (Pₒᵤₜ) of the arrangement is controllable such that the at least one turbine generator is configured to produce power (Pₜ) and the at least one electric boiler is configured to consume power (P_{b}).

According to a second aspect of the present invention, there is provided a method for controlling energy production and consumption of an arrangement comprising a hydropower plant and at least one electric boiler, which are connected to an electricity network. The method comprises producing output power (Pₒᵤₜ) comprising a sum of power (Pₜ) produced by at least one turbine generator of the hydropower plant and power (P_{b}) of the at least one electric boiler, and controlling the output power (Pₒᵤₜ) by producing power (Pₜ) by the at least one turbine generator, and by consuming power (P_{b}) by the at least one electric boiler.

The output power (Pₒᵤₜ) of the arrangement may be linearly adjustable from a production mode, where the at least one turbine generator is configured to produce more power than the at least one electric boiler is configured to consume, to a consumption mode, where the at least one electric boiler is configured to consume all or more power that the at least one turbine generator is configured to produce.

The power of the at least one electric boiler (P_{b}) may be less than or equal to power produced by the at least one turbine generator (Pₜ). The output power produced by the arrangement (Pₒᵤₜ) may be limited by a minimum power of the at least one turbine generator (P_{t,min}) and a minimum power of the at least one electric boiler (P_{b,min}). The arrangement may be configured to output the output power of the arrangement (Pₒᵤₜ) to the electricity network.

The at least one turbine generator and the at least one electric boiler may be connected to the electricity network via a connection point. A voltage level of the at least one electric boiler is the same or different compared to a voltage level of the at least one turbine generator at a production-consumption side of the connection point, at which the at least one electric boiler and the at least one turbine generator are connected directly or via a transformer to a voltage level of the electricity network.

The at least one electric boiler and the at least one turbine generator are adjustable to a selected working point in an active-reactive power diagram. The working point may be selectable according to a working area of inertia and reactive power, which are suitable for the electricity network. The arrangement may be configured to control at least one of the following: voltage, frequency, inertia, total power, active power and reactive power.

The at least one turbine generator may be configured to provide reactive power (Q). The at least one turbine generator may be configured to provide the power (Pₜ) produced by the at least one turbine generator to the electricity network. The at least one turbine generator may be configured to provide reactive power (Q) to the electricity network, and/or to receive reactive power (Q) from the electricity network.

The at least one electric boiler may be configured to adjust a power transmission capacity of the output power (Pₒᵤₜ) of the arrangement. The at least one electric boiler may be configured to control voltage and output power (Pₒᵤₜ) outputted to the electricity network. The at least one electric boiler may be controllable to grow the output power (Pₒᵤₜ) of the arrangement and/or to accelerate a rate of change of the output power (Pₒᵤₜ) of the arrangement. The at least one electric boiler may comprise an electrode boiler or a resistance boiler. The at least one electric boiler may comprise a water boiler or a steam boiler. The at least one electric boiler may comprise a medium being liquid, water or refrigerant, in a phase of liquid or steam.

The at least one turbine generator may have an output capacity higher than or equal to a capacity of the at least one electric boilers. The at least one electric boiler may be configured to consume at least a minimum output capacity of the at least one turbine generator.

The electricity network may comprise a transmission network and a distribution network. The at least one turbine generator and the at least one electric boiler may be coupled to the transmission network and to the distribution network of the electricity network.

The arrangement further comprising at least one of the following: a river water heat exchanger configured to cool heat energy; a heat exchanger configured to direct heat energy for use; a heat accumulator configured to store heat energy; and a heating system configured to utilize heat energy.

According to a third aspect of the present invention, there is provided use of the arrangement of the first aspect as a part of a heating network, a steam network or a cooling network.

According to a fourth aspect, there is provided a heating system comprising the arrangement of the first aspect. According to a fifth aspect, there is provided a steam network comprising the arrangement of the first aspect. According to a sixth aspect, there is provided a cooling network comprising an arrangement of the first aspect.

### BRIEF DESCRIPTION OF THE DRAWINGS

In the following embodiments are discussed in more detail with reference to the attached drawings, of which:
Figure 1 illustrates, by way of an example, an arrangement including an electric boiler connected to a hydropower plant.
Figure 2 illustrates, by way of an example, an arrangement including a hydropower plant and an electric boiler system.
Figure 3 illustrates, by way of an example, a PQ-diagram illustrating working areas of an arrangement.
Figure 4 illustrates, by way of an example, a schematic diagram of an arrangement.
Figure 5 illustrates, by way of an example, a method for controlling energy production and consumption of an arrangement.

Figures are presented as illustrative examples and embodiments may not be limited solely to the illustrated parts, but modifications may be made under the scope as defined in the claims. Figures that may not fully present the claimed invention, aim to provide better understanding on the context and relating technical field.

### DESCRIPTION OF EMBODIMENTS

There is provided at least one electric boiler connected to a hydropower plant. Both the at least one electric boiler and the hydropower plant are connected to an electricity network. The hydropower plant comprises at least one turbine generator. The at least one turbine generator of the hydropower plant is configured to produce power, while the at least one electric boiler is configured to consume power. Output power of an arrangement comprising the hydropower plant and the at least one electric boiler is a sum of the power produced by the at least one turbine generator and the power of the at least one electric boiler. The output power of the arrangement, which is received by the electricity network, is adjustable by the at least one turbine generator and the at least one electric boiler. The electricity network is able to receive the power produced by the arrangement. The at least one electric boiler combined with the hydroelectric plant enables to adjust inertia and voltage of the arrangement, and grow transmission capability of the electricity network.

Currently production capacity of electricity is distributed among different ways of power production. Nuclear power may be used as a basic power forming a constant part of produced power. Water power may be adjusted. Wind power cannot be adjusted, but is dependent on wind conditions. Electricity intensive consumption is growing. For example, district heat is produced by electricity, data centres use electricity, and number of electric vehicles is rising. Production of electricity equals to consumption in a common market, for example Nord pool. At times of less electricity consumption, for example during a night time, adjusting with a water power plant may mean spilling water over a dam. Instead, combining an electric boiler to a turbine generator of a hydropower plant enables to store heat in a mass of water.

Throughout this document, the term arrangement is used for a combination of an electric boiler and a turbine generator of a hydropower plant. The arrangement may comprise more than one electric boilers, turbines and/or generators. The electric boiler is referred with a subscript b, generator with a subscript g, and the turbine and a turbine generator with a subscript *t.* Electric network is referred with a subscript *n.* An arrangement may alternatively be called a system. An electricity network may be called an electricity grid. Total power (S) may be called an apparent power. An electric boiler may be a water boiler or a steam boiler, i.e., a steam generator. An electric boiler refers to a boiler comprising liquid, water, steam, refrigerant or other medium. The medium may be boiled or pressurized. A phase of the medium may be steam or liquid.

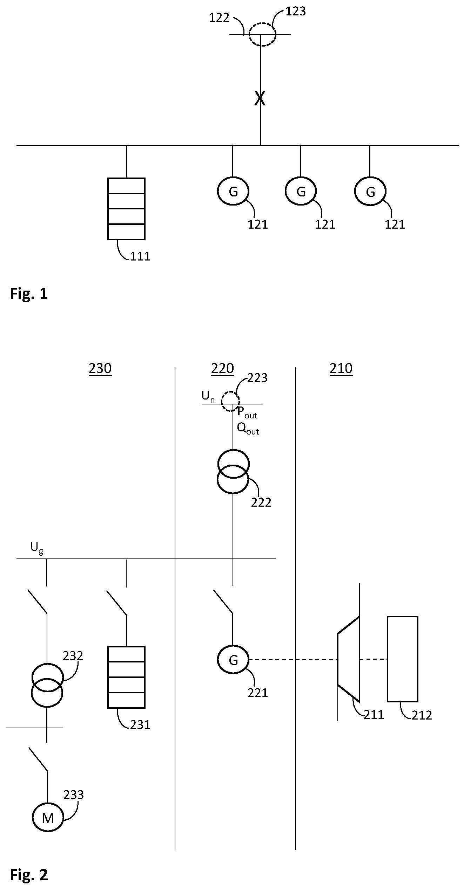

Figure 1 illustrates, by way of an example, an arrangement including an electric boiler connected to a hydropower plant. The arrangement comprises three turbine generators 121 of a hydropower plant. The turbine generators 121 are configured to provide power to the electricity network 112. An electric boiler 111 is connected to the hydropower plant and to the electricity network 112. The turbine generators 121 and the electric boiler 111 are connected to the electricity network 112 via a connection point 123. The electric boiler 111 is configured to adjust, or at least partly consume, power generated by the generators 121. This enables to adjust power provided to the electricity network 112, and to store at least part of the power of the generators 121 in the form of heated water. The electricity boiler 111 is able to support voltage provided to the electricity network 112, transfer of power, and/or stability of power transmission. The latter is effective for increased transmission distances. In principle, the turbine generators 121 provide power and the electric boiler 111 consumes power. The electric boiler 111 enables to balance power outputted to the electricity network 112. The balance may be positive or negative. Further, the electricity boiler 111 has higher rate of change (amplitude) than the turbine generators 121. The electricity boiler 111 enables the hydropower plant to adapt to changes faster than the hydropower plant would be able without the electricity boiler 111. The hydroelectric plant combined with the at least one electric boiler is configured to support inertia and voltage of the arrangement, and to grow transmission capability of the electricity network.

The arrangement may comprise one or more turbine generators and/or one or more electricity boilers. Number of turbine generators and electricity boilers may be selected based on the system and energy and production needs. A power of the at least one electric boiler is equal to or higher than the minimum power of the at least one turbine generator. In the arrangement the at least one electric boiler is able to consume a minimum output power of the at least one turbine. Power produced by the arrangement is limited by the minimum power of the at least one turbine generator and the minimum power of the at least one electric boiler. A voltage level of the at least one or more electric boilers may be the same, or differ from, a voltage level of the at least one or more turbine generators, before those are connected to an electric network via a connection point. The connection point forms a technical connection to the electric network, such as a main grid. At the connection point active power, reactive power and inertia are kept at a desired level. The desired levels refer to levels suitable for the electric network. The at least one turbine generator and the at least one electric boiler are configured to provide active power and reactive power with the electric network via the connection point.

The arrangement may be linearly adjustable. Linear adjustment may be stepless. The arrangement is adjustable between a production mode and a consumption mode. In the production mode the at least one turbine generator is configured to produce power in excess of what the at least one electric boiler is configured to consume. In the consumption mode the at least one electric boiler is configured to consume more power than the at least one turbine generator is configured to produce. In the consumption mode the at least one electric boiler is configured to consume all the power that the at least one turbine generator is configured to produce.

Energy production is distributed and this requires transmission of energy to users. In electricity transmission consuming and production are distributed, and transmission distances may be large. This poses challenges for controlling dynamic stability, voltage stability, production and consumption of the power production system. Dynamic stability of the power production system may relate to inertia of the system. Voltage stability of the power production system may relate to transmission of electricity and distances from production plants to consuming sites or users. Production and consumption may relate to transmission and balance of the power production system. Dynamic stability in an electricity network refers to the ability of the system to maintain stable operation in any situation, including disturbance, change in load or failure of a generator or a transmission line. Maintaining frequency and voltage levels of the electricity network enable to maintain stability. For example, generators may adjust their output in response to load fluctuations or faults. Voltage stability refers to a power system to maintain steady voltages at all system nodes after disturbances or changes in operating conditions. For example, high demand for power may lead to a voltage drop, especially in areas far from power sources. Voltage instability may be due to insufficient generation of power in response to demand, or congested transmission lines. Synchronous generators supply reactive power, which enables to maintain voltage levels. Due to increasing integration of renewable energy sources and distributed energy sources, voltage stability has become more challenging. Power sources may be variable in nature, causing voltage fluctuations.

Stability of an electricity arrangement may be divided into voltage stability, frequency stability and an angular stability. The voltage stability relates to distances from the production plants to the consumption sites/-ends. The frequency stability relates to balance between production and consumption. The angular stability relates to capability to transmit power and inertia. Inertia refers to kinetic energy, which is stored to rotating masses of the electricity system, and enables the system to resist changes in frequency. When inertia is small, for example sudden shut-down of a high-capacity of a power plant causes a large temporal change in frequency. When inertia is high, temporal change in frequency may be low. For example, in Nordic countries, including Finland, Sweden, Norway and part of Denmark, inertia of electricity network is measured by modelling and real time status information of single generator units. Inertia is caused to an electricity network by masses rotating at the frequency of the electricity network. Rotating mass and its rotating velocity have effect on inertia. Nuclear power plants grow inertia of a power system the most. Heavy masses with very high angular velocities exist in condensing power plants. In hydropower plants lower masses rotate with lower angular velocity compared to condensing power plants. Most of the wind power plants and solar power plants do not produce inertia to the electricity network. Load(s), which may be due to high-power motors rotating with the angular velocity of the electricity network, may grow inertia of the electricity network. While production plants have moved further from consumptions sites/end users, there is increased need for transmission of power. Long transmission distances decrease voltage in the consumption sites/end users. Transmission abilities and voltage stability have been enhanced by parallel- or static synchronous compensators.

Figure 2 illustrates, by way of an example, an arrangement including a hydropower plant and an electric boiler system 230. The hydropower plant comprises a turbine section 210 and a generator section 220. The turbine section 210 comprises a turbine 211 onto which water from a water source 212 is directed. Water source 212 may be a reservoir or include moving or flowing water, for example directed from a river. The turbine 211 may be a hydro turbine, and comprise one or more turbines or turbine units. The turbine 211 is connected to a generator 221 of the generator section 220. The generator 221 is connectable to an electricity network, either directly or via a transformer 222, as illustrated in Fig. 2. Voltage of the electricity network is marked as Uₙ in Fig. 2. The electric boiler system 230 comprises an electric boiler 231, which is connectable to the electricity network. The generator 221 and the electric boiler 231 are at the same voltage level U_{g}, at a production-consumption side, before those are connected to the electricity network (voltage level Uₙ) in Fig. 2. A motor M 233 is configured to provide driving power for the electric boiler 231. In addition, the motor M 233 may provide power for lightning and warming of the space, and used automation. The motor M 233 is connectable to the electricity network either directly or via a transformer 232, as illustrated in Fig. 2. The electric boiler 231 and the generator 221 are connected to the electricity network via a connection point 223. After the connection point 223, on the electricity network side, the boiler 231 and the generator 221 are connected to voltage level Uₙ of the electricity network. Before a connection point, on the production-consumption side, the one or more turbine generators and the one or more electric boilers may be at the same or different power level. "Before the connection point" means at the production-consumption side of the connection point. "After connection point" means at the electricity network side of the connection point. The connection point connects the production-consumption side and the electricity network side.

Multiple hydropower plants may be joined to the electric network via a common or separate connection points. As an example, three hydropower plants may be connected to the electric network via three connection points, via a common connection point, or via two connection points of which one connection point is common to two of the hydropower plants. There may be one, more, or different amounts of connection points and hydropower plants of which at least one comprises at least one electricity boiler. There may be different amounts and variations of hydropower plants and connection points. The hydropower plants are connected to the (common) electricity network via connection points. In addition, multiple hydropower plants may be connected to each other via a running water, like a river area. In other words, the multiple hydropower plants are situated along a common river area, or one river runs through the multiple hydropower plants. The running water (area) is common to the multiple hydropower plants. Output of the multiple hydropower plants along the common river may be utilized via one or number of connection points. The connection points enable the multiple of hydropower plants along the common river area to control power provided to the electric network, as presented in this application. The common river enables hydropower plants in downstream to utilize water received from the hydropower plants upstream of those.

A hydropower plant is configured to provide electricity to an electricity network, i.e., electricity grid. The electricity network comprises a distribution network and a transmission network which are configured to provide the electric energy from the electricity plants to the end users and customers (of the electricity network). Electricity may be generated in different kinds of power plants, and there may be local and timely variations in the quality of electricity. Voltage of a distribution network of an electricity network may be 10, 20 or 30 kV. Voltage of a transmission network of an electricity network (Uₙ) may vary, being for example 110, 220 or 440 kV. Variations in the electricity network are monitored via one or more measurable variables, like a level of voltage and/or frequency, a total inertia, a total power, an active power and a reactive power. A square of the total power (S) corresponds to the sum of: a square of the active power (P) and a square of the reactive power (Q). The total power (S) is a complex variable.

A turbine, which may be called a hydro turbine, is a rotary mechanical device configured to convert mechanical and potential energy of water into mechanical work, which may be converted to electrical power by a generator. A turbine comprises blades attached to a shaft or a drum. Moving fluid, such as water, is configured to act on the blades, which move and impart rotational energy to a rotor of the generator. The moving fluid contains potential energy and kinetic energy, which may be called a pressure head and a velocity head, correspondingly. Turbines may be impulse turbines or reaction turbines. Impulse turbines may be efficient, when the flow is low and the inlet pressure is high. Impulse turbines change the direction of flow of a high velocity fluid, and the resulting impulse spins the turbine leaving the fluid flow with diminished kinetic energy. Newton's second law, force (F) equals to mass (m) times acceleration (a), describes the transfer of energy for impulse turbines. Before reaching the turbine, the pressure head of the fluid may be changed to a velocity head by accelerating the fluid in a nozzle. A reaction turbine is configured to develop torque by reacting to the fluid's pressure or mass. The fluid pressure changes upon passing through the turbine rotor blades. Newton's third law, saying when an object (1) applies a force (F₁₂) to a second object (2), the second object (2) applies an equal force in the opposite direction (-F₂₁) to the first object (1), describes transfer of energy for reaction turbines. Reaction turbines are suited for higher flow velocities or applications, where upstream pressure is low. Turbines may utilize both reaction and impulse concepts. The one or more generators of the hydropower plant are connected to an electricity network, either directly or via one or more transformers. One or more transformers may comprise one or more booster transformers.

An electric boiler system may comprise one or more electric boilers. An electric boiler uses electricity to make heat. Water from a primary circuit of the electric boiler is pumped into the water tank containing electrical resistors. Output capacity of the electric boiler is controlled at a surface of the water tank. The heated water from the primary circuit of the electric boiler may be distributed via a heat exchanger to a thermal energy storage facility and/or to a heating network. The electric boiler is connected to the voltage level of the generator of the hydropower plant, and to the voltage level of the electricity network, either directly or via one or more transformers. The electric boiler may be connected to a low voltage level. The low voltage level refers to a voltage range that is below the standard or nominal voltage levels of high-power transmission and distribution in the electricity network. Low voltage level range refers to voltages up to 1 kV, for example of 0.4, 0.7 or 1.0 kV. However, it may vary by region or standard. In residential and commercial electrical systems, the voltage is often around 230 V in Europe, or 120 V in the USA, which would be considered low voltage. In industrial or distribution networks, higher voltages are used for efficient power transmission.

Multiple hydropower plants in a common river area may be connected to each other via an electricity network. This enables to transfer electric energy between the hydropower plants via transmission- or distribution networks.

The turbine 211 is configured to provide power Pₜ. The electric boiler 231 is configured to provide power P_{b}. The electric boiler 231 may consume power, thus power P_{b} may be negative. The generator is configured to provide power P_{g}. Turbine power Pt is almost equal to generator power P_{g} (Pt ≈ P_{g}). The power Pₒᵤₜ outputted to the electricity network is sum of the powers of the (turbine) generator P_{g} and the electric boiler P_{b} (Pₒᵤₜ = P_{g} - P_{b}). Q is a reactive power to the electricity network.

In an electric alternating current arrangement outputted power in watts is
${P}_{out} = \frac{{U}_{g} {U}_{n}}{{X}_{t}} sin δ$
wherein Uₙ represents voltage of the electricity network. U_{g} represents voltage generated by the generator 221. The voltages are measured in volts. Xt represents reactance of the transformer 222. Xt represents total reactance, being combination of inductive and capacitive reactances, to which the arrangement is subjected to. Reactance impedes the flow of alternating current in ohms. *δ* represents a power angle, or a phase angle, measured in radians. The phase angle represents the phase difference between the generator voltage U_{g} and the electricity network voltage Uₙ. The phase angle determines the amount of real power transferred between components in the arrangement. The previous equation for the output power (Pₒᵤₜ) corresponds to the real power output of the arrangement or the system. The output power (Pₒᵤₜ) depends on the generator voltage (U_{g}), the electricity network voltage (Uₙ), the reactance (Xt) of the arrangement and the phase angle (*δ*). As the phase angle (*δ*) increases, up to a certain limit, the output power increases (Pₒᵤₜ). Sinusoidal of the phase angle (*sin δ*) represents the relationship between the voltage difference (or phase difference) and the power transfer. Reactance (Xt) of the transformer illustrates impedance to the flow of alternating current, which reduces the total available power as the reactance (Xt) increases.

In an electric alternating current arrangement a reactive power output Q of the arrangement is
$Q = \frac{1}{{X}_{t}} \left({U}_{g}^{2}+{U}_{n}^{2}+{U}_{g}{U}_{n} cos δ\right)$
wherein Q represents the reactive power output. The reactive power output is measured in Volt-Amperes reactive, VARs. As in the previous, Xt represents the total reactance, which accounts for the opposition to the current flow due to inductance and capacitance in the system, U_{g} represents the generator voltage, Uₙ represents voltage of the electricity network and the power angle represents the phase difference between the generator voltage (U_{g}) and the electricity network voltage (Uₙ). Squared voltages of the generator (U_{g}) and the electricity network voltages (Uₙ) amplifies effect of those in the previous equation for the reactive power output. The last term involves the product of the generator (U_{g}) and electricity network (Uₙ) voltages multiplied by the cosine of the power angle (cos δ). The cosine term indicates the relationship between the voltages in terms of a phase alignment such that when the power angle δ = 0, the voltages are in phase, cos δ = 1, and the reactive power is at its maximum for the given voltages. As the power angle (δ) increases, cos δ decreases, and the reactive power is configured to change accordingly. Reactive power is measured for maintaining voltage stability in AC power systems. The term cos δ shows how the phase difference between voltages impacts the reactive power. High reactance (Xₜ) results in less reactive power output for the same voltages and power angle. Voltage differences (U_{g}, Uₙ) contribute to the reactive power, especially when the voltages are at different magnitudes or out of phase with each other. The above equation enables to measure how much reactive power the arrangement is supplying or requiring. This may be relevant for voltage regulation and system stability.

Equation of motion or a balance equation for the arrangement is
$ω \left(t\right) J \frac{{d}^{2} δ \left(t\right)}{{dt}^{2}} = {P}_{g} \left(t\right) - {P}_{b} \left(t\right) - {P}_{t} \left(t\right)$
wherein ω(t) represents angular velocity, or rotational speed, of the rotor at time t. The units of the angular velocity are radians per second (rad/s). Angular velocity may relate to the frequency of the arrangement. J represents the moment of inertia of the rotor, which represents rotational inertia of the arrangement, which resists changes in rotational speed. The unit of the moment of inertia is kg·m². Second derivate of the power angle (d²δ(t)/dt²) represents acceleration of the rotor's angle. It describes how quickly the power angle is changing with respect to time, and it is a measure of how rapidly the arrangement is speeding up or slowing down. An active power of the generator at a time t (P_{g}(t)) represents the total power that the generator is producing, measured in Watts (W). Active power of the electric boiler at a time t, (P_{b}(t)) represents active power consumed by the electric boiler at the time t, which is drawn from the hydropower plant turbine generator. Active power of turbine at a time t (Pₜ(t)) represents power output from the turbine driving the generator. It is a real power, dependent on the mechanical power input to the generator. Left side of the previous equation of motion involves the acceleration of the rotor, which depends on its moment of inertia (J) and the angular velocity (ω(t)). The second time derivative of δ(t) represents how quickly the power angle is changing, which is directly related to how the arrangement's rotor is accelerating to decelerating. The right side of the previous equation of motion represents the difference between generated active power and the mechanical power input (turbine power), adjusted by the active power of the electric boiler. If the generator is producing more active power than the turbine, the rotor will accelerate. If the mechanical input exceeds the generated active power, the rotor will decelerate. The power equation enables to analyze stability of the arrangement. If the active power generation exceeds the mechanical input, the rotor will accelerate and vice versa. A large discrepancy between these terms can lead to instability. The equation shows that when active power of the generator is greater than the combined active powers of the electric boiler and the turbine, the arrangement will accelerate. If the reverse is true, the arrangement will decelerate. In a steady state the angular velocity (ω(t)) is constant, i.e., the arrangement is running at a synchronous speed, and the system would reach an equilibrium where the generated power exactly balances the power consumed and the turbine power.

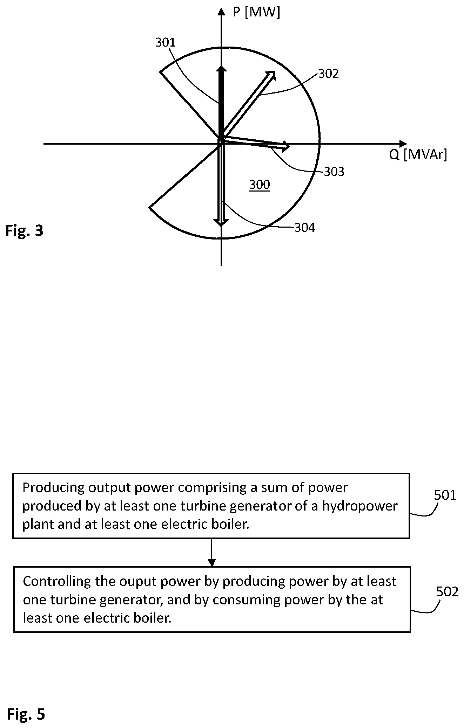

Figure 3 illustrates, by way of an example, a PQ-diagram illustrating working areas of an arrangement. The PQ-diagram describes reactive and active power that an arrangement is able to provide. Reactive power (Q) in Volt-Amperes Reactive (VAR) is illustrated in the horizontal x-axle. Active power (P) in Watts (W) is illustrated in the vertical y-axle. Powers of the PQ-diagram have a magnitude and a direction. The arrangement comprises a hydropower plant including a turbine, a generator, and an electric boiler, which are all connected to an electricity network, for example as illustrated in Fig. 1 or 2. The turbine provides active power Pt to the electricity network. This is illustrated by an arrow 301. The generator provides active power P_{g} and reactive power Q to the electricity network. Power (P_{g}, Q) of the generator is illustrated by an arrow 302, and it may be a positive or a negative, i.e., varying on the positive or negative side of the power axle y. The electric boiler provides active power P_{b} to the electricity network. Active power P_{b} of the electric boiler is illustrated by an arrow 304. Active power P_{b} of the electric boiler is negative, varying at the negative area of the reactive power axle x, as the electric boiler is configured to consume power. Total power S provided by the arrangement to the electricity network is illustrated by an arrow 303. As illustrated in Fig. 3, working area 300 of the arrangement is adjustable in four quarters of the PQ-diagram. A working point of the arrangement may be set, or biased, to a desired point at the working area 300. In a conventional implementation working area of the turbine generator is at two quarters of the PQ-diagram, and working area of the electric boiler is scalar at the negative direction of consumption. Thus, the arrangement enables to adjust output of the electric boiler combined with the hydropower plant in a wide range, among each quarter of the PQ-diagram. Total power S 303 provided by the arrangement is sum of the illustrated powers 301, 302, 304. The total power is a complex power. Turbine power (Pt) 301 and electric boiler power (P_{b}) 304 are real powers, in a real level of the PQ-diagram. Power of the generator (P_{g}, Q) 302 includes a complex power (Q), in a complex level of the PQ-diagram.

In order to illustrate the situation, it is assumed that active power of the turbine and active power of the generator are approximately equal (Pₜ ≈ P_{g}). The total power (S) of the arrangement includes a complex part and is
$S = {P}_{g} + {P}_{b} + jQ$
wherein S represents a complex total power, measured in Volt-Amperes, VA. This is the real power that is transmitted to the electricity network, combining the active power of the generator (P_{g}) measured in Watts, the reactive power consumed by the electric boiler P_{b} measured in Watts and a reactive power (Q) measured in Volt-Amperes Reactive, VARs. The active power (P_{g}) describes the useful work and the reactive power (P_{b}) describes power not performing work, but part of the energy flow in the arrangement. The multiplication jQⱼ represents imaginary part of the total power, which is due to the reactive power of the arrangement. The imaginary unit j represents emission (result) of the (complex) reactive power indicating that the reactive power is out of phase with real power by 90 degrees. The reactive power (Q) represents the imaginary component of a complex power, and it is multiplied by the imaginary unit (j).

Fig. 3 illustrates ability to control and adjust voltage and inertia of the arrangement. The at least one electric boiler and the at least one turbine generator may be adjusted to a selected work point. This enables to control driving speed amplification and speed, inertia and reactive power of the arrangement. The at least one turbine generator is configured to provide active turbine power (Pt) to an electricity network, and to provide or receive reactive power (Q) to/from the electricity network. The at least one turbine generator is configured to receive reactive power (P_{b}) from the electricity network. A working point of the arrangement is settable to a desired point in the PQ-diagram. The at least one turbine generator configured to generate active power (Pt). The at least one generator is configured to produce reactive power (Q). The reactive power has a direction, and it may be capacitive or inductive. The at least one electric boiler is configured to consume power (P_{b}). The total power combined of the powers of the at least one turbine generator, at least one generator and the at least one electric boiler is transmitted to the electricity network. The working point of the at least one turbine and the at least one turbine generator combined with the at least one electric boiler is settable to an area of production capacity of inertia and reactive power, which are suitable for the electricity network.

Production of the arrangement may be controlled in relation to electric network variables, like a reserve market. The reserve market is a part of an electricity market where resources are procured to ensure the reliability and stability of the electricity grid. The reserve market is designed to provide backup power in case there is a sudden imbalance between electricity supply and demand. This may help to avoid blackouts or network instability, and to ensure that there is enough capacity available to respond quickly to unexpected events, such as generator failures, transmission issues, or demand spikes. In reserve markets electricity network operators, like system operators or transmission system operators, may procure reserve power form various resources, including power plants, fast gas turbine plants, renewable energy systems, batteries, or alike resources, for example large consumers, which are able to adjust their demand. Participants of the reserve markets, for example power plants, storage facilities, or demand response aggregators, submit bids indicating how much reserve capacity those may offer and how it is compensated. If there is an unexpected event, like a loss of generation or a sudden spike in demand, the system operator will call upon the reserve market to provide the required capacity. The resources are activated in the order of their availability and effectiveness. Operators may compensate to the resources for activating and/or making their capacity available. The frequency control reserve is configured to maintain the balance between supply and demand on the electricity network and to stabilize the frequency of the electricity network, if deviation from its nominal value is detected. The nominal value of the frequency of the electricity network is 50 Hz in Europe and 60 Hz in the USA. Up-regulation is implemented by adding production or reducing consumption. Down-regulation is implemented by cutting down production or adding consumption. As renewable energy sources, like wind and solar become more prevalent, reserve markets are becoming increasingly important because these sources are intermittent and may not always be available when needed. This enables to maintain the electricity network stable and secure by ensuring the backup resources for unexpected situations.

In addition to the frequency, inertia and power (active power and/or reactive power) are controlled in order to maintain stability in the electricity network. Inertia in the context of the electricity network refers to the rotational inertia of large, synchronous generators, such as generators of the hydropower plants, connected to the electricity network. Upon increase of excitation, reactive power is configured to increase. Upon increase of reactive power, a power factor is configured to lag (decrease). The lagging load consumes reactive power and the generator is configured to supply reactive power to the arrangement. The generators including hydroelectric turbines resist changes in their rotational speed, which is called inertia. Inertia provides a stabilizing effect by helping the system to resist sudden frequency fluctuations caused by imbalances between the power supply and demand in the electricity network. Upon sudden loss of generation, the inertia of the rotating turbines helps to slow down the rate of change of frequency. This provides time to respond for other power sources. If frequency of the electricity network drops, the inertia slows the rate at which the frequency falls, allowing time for frequency regulation services to activate, for example by releasing reserves or increasing generation. Increasing use of renewable energy sources, like wind and solar, which do not provide inertia, but are non-synchronous, may cause the overall system inertia to decrease. This may result in faster frequency fluctuations and pose challenges for maintaining stability of the electricity network. Systems lacking sufficient inertia may utilize additional technologies, like energy storage systems, to help maintaining stability. The reactive power relates to managing reactive power in the electrical network to ensure voltage stability. The reactive power enables maintaining proper voltage levels across the electricity network. Without sufficient reactive power voltage can drop or become unstable, leading to problems. Generators provide reactive power to the electricity network. As inductive loads as generators absorb reactive power and reduce voltage. The reactive power may be managed by synchronous motors, capacitor banks, static synchronous compensators (STATCOMs), or static VAR compensators (SVC). Synchronous motors or condensers provide reactive power to the electricity network by adjusting their excitation. Capacitor banks are used to inject reactive power upon need, for example during high demand in the electricity network. STATCOM can inject and absorb reactive power. It provides fast and flexible control of voltage levels in the electricity network. SVC is similar to the STATCOM, but is uses thyristor-controlled reactors or capacitors to regulate reactive power. Voltage regulation and reactive power compensation is needed for maintaining the voltage levels within an acceptable range across the electricity network. Too high or too low voltage levels can lead to equipment damage or loss of reactive power. Reactive power is needed to ensure the efficient operation of transmission lines and transformers. Without enough reactive power, the voltage across the electricity network can become unstable, potentially leading to power outages. Use of renewable energy sources can complicate reactive power management, because their output is intermittent and variable. This means that voltage regulation may require quick and dynamic control in order to adapt to changing generation levels. As electricity networks become more interconnected with diverse generation sources, effective reactive power compensation becomes more complex, requiring control systems to balance supply and demand for power. In modern electricity networks managing both of the elements of inertia and reactive power (voltage) effectively has become challenging.

The presented arrangement enables to support both inertia and voltage of the electricity network. The arrangement enables to activate the hydropower plants to participate the supporting. The arrangement enables the hydropower plants to be more effectively utilized in reserve markets. The arrangement enables flexible protection for the system. For example, it enables to activate more power to be decoupled. Utilization rate of the electricity network may be grown, since thermal and electric energy consumption is controlled. The arrangement allows to distribute the production and consumption. The arrangement enables to grow more efficient hydropower based electricity production.

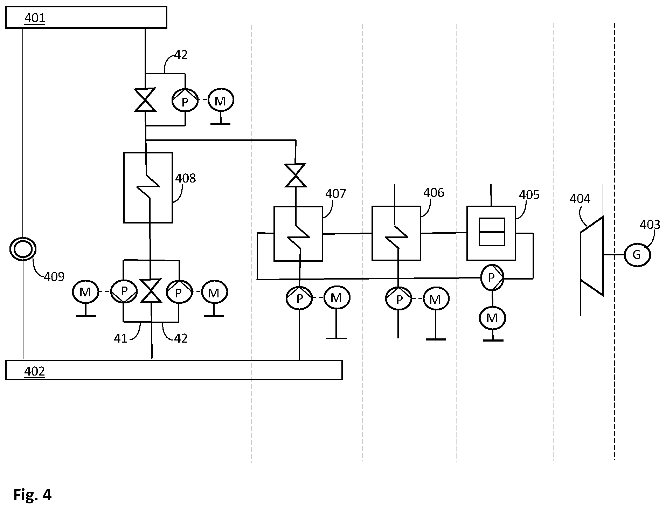

Figure 4 illustrates, by way of an example, a schematic diagram of an arrangement according to embodiments. In Fig. 4 the mark M refers to a motor configured to drive a unit and P refers to a pump, which has an arrow for a direction. Arrangement comprises a generator, G, 403 and a hydro turbine 404 of a hydropower plant. These may be referred as a turbine generator. An electric boiler 405 is connected to the turbine generator 404-403 of the hydropower plant. Thermal output of the electric boiler 405 is connected to a river water cooler 406. Thermal output of the electric boiler 405 may be directed to a river via the river water cooler 406. With the river water cooler 406 heat is not utilized, but just cooled and removed to the river. Water flow rate of the river water cooler 406 is typically below 2 % of that of the turbine 404. This enables appropriate use of the river water cooler 406 alongside rivers. The arrangement enables to increase output capacity of the power (W/s) in order to provide a power response. The turbine 404 has a minimum power (P_{t,min}) and critical power areas. With the river water cooler 406 the turbine 404 is able to work starting from its zero power. The electricity boiler 405 may have a minimum power (P_{b,min}). With the river water cooler 406 the electricity boiler 405 is able to work from its zero power. The zero powers enable to adjust the turbine 404 and the electric boiler 405 to an appropriate or selected working point. The arrangement enables to provide higher control speed magnification (gain) and speed for reserve market controlling, since power changes for the electric boiler 405 and for the turbine 404, which have divergent directions, are performable at the same time. Inertia and support for the reactive power may be set in a selected place of the working area of the PQ- diagram, as illustrated in Fig. 3.

The hydropower plant of Fig. 4 is connected to a heating system 409 via a heat exchanger 407. The heating system 409 comprises a network of pipes configured to carry hot medium, water or steam from the hydropower plant for end use, to buildings or other structures. Heat energy may be utilized for district heating, space heating, hot water supply, industrial processes and alike. Poles form support structures for to maintain correct angle or placement of the lines. A transmission pole 401 is configured to handle electrical and/or communication infrastructure. The transmission pole 401 may support power and/or signal transmission for the heating plant, for example power the heat and/or distribution pumps, or control liquid/steam flow. A pile support pole 402 comprises a foundation element configured to support and/or stabilize structures above ground, like heating plant, heating distribution infrastructure, storage tanks or buildings. The electric boiler 405 is connected to a thermal battery 408, which is configured to store thermal energy. The thermal battery 408 is configured to absorb and store 41 thermal energy, or heat, during periods of low demand or when there is abundance of heat, for example, from renewable sources. The stored thermal energy may be released 42 upon need to provide heating, power, or other thermal services. The stored thermal energy may be released 42 to the distribution network via a transmission pole 401. The transmission pole 401 may be used to carry and distribute energy through overhead power lines. The heat exchanger 407 and the thermal battery 408 are connected to the transmission pole 401. Thermal energy from the heat exchanger 407 and/or from the thermal battery 408 may be released 42 via the transmission pole 401. The heat exchanger 407 and the thermal battery 408 are connected to a pile support pole 402. The pile support pole 402 may be driven into the ground. The heat exchanger 407 enables to utilize the heat energy, for example for district heating, industrial heating, other system utilizing heated medium or steam, or alike. Heat energy may be hot medium, like liquid, water or steam. Power produced by the turbine generator 403-404 and the electric boiler 405 may be directed to the one or more of the following: to the river water cooler 406, to the heat exchanger 407, to the thermal battery 408, and to the heating system 409 of Fig. 4.

The thermal energy may be directed to a river water heat exchanger, a heating network, a steam network, a cooling network, a thermal battery, or alike part connected to the arrangement. The river water heat exchanger is configured to cool the water, for example before circulated to a river. The heating network is able to utilize thermal energy received via a heat exchanger. The steam network utilizes thermal energy in form of a steam instead of liquid. A cooling network uses cooling medium, refrigerant. A thermal battery is configured to store thermal energy.

The turbine generator has a minimum power (P_{t,min} > 0), at which it is able to operate. The electricity network shall be able to receive the minimum power of the turbine generator (P_{t,min}). The electricity boiler has a minimum power (P_{b,min}). The electricity boiler is able to consume the turbine generator minimum power (P_{t,min}), i.e., P_{b,min} > P_{t,min}. Turbine-generator-electric boiler plant comprises power areas such that output power (Pₒᵤₜ) of the arrangement is limited by the minimum power of the turbine (P_{t,min}) and the minimum power of the electric boiler (P_{b,min}), such that Pₒᵤₜ = -(Pₜ - P_{t,min})... + (P_{b}- P_{b,min}). Controlling reactive power is implemented by controlling voltage of the generator (U_{g}).

The arrangement comprises an electric boiler combined to a hydropower plant, which are connected to an electricity network. Thermal energy of the electric boiler is transferable to an appropriate place, for example to a technical-economy beneficial place. The arrangement is able to control production and consumption of power. There is provided a control system to support inertia and reactive power of the turbine generator. This enables to adjust a working point of the at least one turbine and at least one generator of the hydropower plant to an appropriate working area such that production capacity of inertia, active power (of turbine(s) and boiler(s)) and reactive power (of generator(s)) are suitable for the electricity network. The at least one generator, the at least one turbine and the at least one electric boiler are controllable such that working point of those is settable to a selected working area of a PQ-diagram illustrating reactive-active-power(s) of the arrangement.

Figure 5 illustrates, by way of an example, a method for controlling energy production and consumption of an arrangement. The arrangement comprises a hydropower plant and at least one electric boiler, which are connected to an electricity network. The method comprises producing output power comprising a sum of power produced by the at least one turbine generator of a hydropower plant and at least one electric boiler. The method further comprises controlling the output power by producing power by the at least one turbine generator and by consuming power by the at least one electric boiler.

It is to be understood that the disclosed embodiments are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

The described features, structures, or characteristics may be combined in any suitable manner in one or more embodiments. In the previous description, numerous specific details are provided, such as examples of structures, lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e., a singular form, throughout this document does not exclude a plurality.

## Claims

1. An arrangement configured to control energy production and consumption of the arrangement, the arrangement comprising:
- a hydropower plant connected to an electricity network (122), the hydropower plant including at least one turbine generator (121), and
- at least one electric boiler (111) connected to the electricity network (122),
- wherein output power (Pₒᵤₜ) of the arrangement comprises a sum of power (Pt) produced by the at least one turbine generator (121) and power (P_{b}) of the at least one electric boiler (111),
- wherein the output power (Pₒᵤₜ) of the arrangement is controllable such that the at least one turbine generator (121) is configured to produce power (Pt) and the at least one electric boiler (111) is configured to consume power (P_{b}), and
- wherein the at least one turbine generator (121) is configured to provide reactive power (Q) to the electricity network (122), and/or to receive reactive power (Q) from the electricity network (122).

2. An arrangement according to the preceding claim 1, wherein the output power (Pₒᵤₜ) of the arrangement is linearly adjustable from a production mode, where the at least one turbine generator (121) is configured to produce more power than the at least one electric boiler (111) is configured to consume, to a consumption mode, where the at least one electric boiler (111) is configured to consume all or more power that the at least one turbine generator (121) is configured to produce.

3. An arrangement according to any of the preceding claims, comprising the arrangement being configurable such that at least one of the following:
- the power (P_{b}) of the at least one electric boiler (111) is less than or equal to power (Pₜ) produced by the at least one turbine generator (121),
- the output power (Pₒᵤₜ) produced by the arrangement is limited by a minimum power (P_{t,m,n}) of the at least one turbine generator (121) and a minimum power (P_{b,min}) of the at least one electric boiler (111), and
- the arrangement is configured to output the output power (Pₒᵤₜ) of the arrangement to the electricity network (122).

4. An arrangement according to any one of the preceding claims, comprising a connection point (123), via which the at least one turbine generator (121) and the at least one electric boiler (111) are connected to the electricity network (122).

5. An arrangement according to the preceding claim 5, wherein a voltage level of the at least one electric boiler (111) is the same or different compared to a voltage level of the at least one turbine generator (121) at a production-consumption side of the connection point, at which the at least one electric boiler (111) and the at least one turbine generator (121) are connected directly or via a transformer to a voltage level of the electricity network (122).

6. An arrangement according to any one of the preceding claims, wherein the at least one electric boiler (111) and the at least one turbine generator (121) are adjustable to a selected working point in an active-reactive power diagram.

7. An arrangement according to any of the preceding claims, wherein the arrangement is configured to control at least one of the following: voltage, frequency, inertia, total power, active power and reactive power of the arrangement.

8. An arrangement according to any one of the preceding claims, comprising a working point in an active-reactive power diagram, wherein the working point is selectable in the active-reactive power diagram by control of power (Pt) of the at least one turbine generator (121), power (P_{b}) of the at least one electric boiler (111), and reactive power (Q).

9. An arrangement according to any one of the preceding claims, the at least one electric boiler (111) is controllable to grow the output power (Pₒᵤₜ) of the arrangement and/or to accelerate a rate of change of the output power (Pₒᵤₜ) of the arrangement.

10. An arrangement according to any of the preceding claims, comprising at least one of the following:
- the at least one turbine generator (121) has an output capacity higher than or equal to a capacity of the at least one electric boiler (111), and
- the at least one electric boiler (111) is configured to consume at least a minimum output capacity of the at least one turbine generator (121).

11. An arrangement according to any one of the preceding claims, further comprising at least one of the following:
- a river water heat exchanger (406) configured to cool heat energy;
- a heat exchanger (407) configured to direct heat energy for use;
- a heat accumulator (408) configured to store heat energy; and
- a heating system (409) configured to utilize heat energy.

12. A heating network comprising an arrangement according to any one of the preceding claims 1-14.

13. A steam network comprising an arrangement according to any one of the preceding claims 1-14.

14. A cooling network comprising an arrangement according to any one of the preceding claims 1-14.

15. A method for controlling energy production and consumption of an arrangement comprising a hydropower plant and at least one electric boiler, which are connected to an electricity network, the method comprising
- producing (501) output power (Pₒᵤₜ) comprising a sum of power (Pt) produced by at least one turbine generator of the hydropower plant and power (P_{b}) of the at least one electric boiler, and
- controlling (502) the output power (Pₒᵤₜ) by producing power (Pt) by the at least one turbine generator, and by consuming power (P_{b}) by the at least one electric boiler.
